# EUROPÄISCHE PATENTSCHRIFT

(11) **EP 0 708 747 B1**
(45) Veröffentlichungstag und Bekanntmachung des Hinweises auf die Patenterteilung: **02.12.1998**
(21) Anmeldenummer: 94918298.4
(22) Anmeldetag: 23.06.1994
(51) Int. Cl.: C04B 40/02

(54) **VERFAHREN ZUR REGELUNG DES HYDRATATIONSVERHALTENS VON GIPS BEI DER VERBUNDWERKSTOFF-HERSTELLUNG**
METHOD OF CONTROLLING THE HYDRATION BEHAVIOUR OF GIPSUM IN THE MANUFACTURE OF COMPOSITE MATERIALS
PROCEDE DE REGULATION DU COMOPRTEMENT D'HYDRATATION DU PLATRE DANS LA FABRICATION DES MATERIAUX COMPOSITES

(30) Priorität: 10.07.1993 DE 4323116
(43) Veröffentlichungstag der Anmeldung: 01.05.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: SATTLER, Heinz, D-38108 Braunschweig (DE); THOLE, Volker, D-38118 Braunschweig (DE); SCHMELMER, Bernhard, D-63839 Kleinwallstadt (DE)
(86) Internationale Anmeldenummer: DE9400718
(87) Internationale Veröffentlichungsnummer: WO9501942

(56) Entgegenhaltungen:
- EP-A- 0 171 665
- EP-A- 0 429 820
- EP-A- 0 561 270
- DE-A- 3 307 927
- US-A- 1 630 579
- US-A- 2 239 861
- DATABASE WPI Section Ch, Week 7840, Derwent Publications Ltd., London, GB; Class L02, AN 78-71634A & JP,A,53 032 369 (YAMANASHI KASEI KOG KK) 7. September 1978

## Beschreibung

Die Erfindung betrifft ein Verfahren zur Regelung des Hydratationsverhaltens von Gips bei der Herstellung von Verbundwerkstoffen, insbesondere Platten, gemäß dem Oberbegriff des Hauptanspruches.

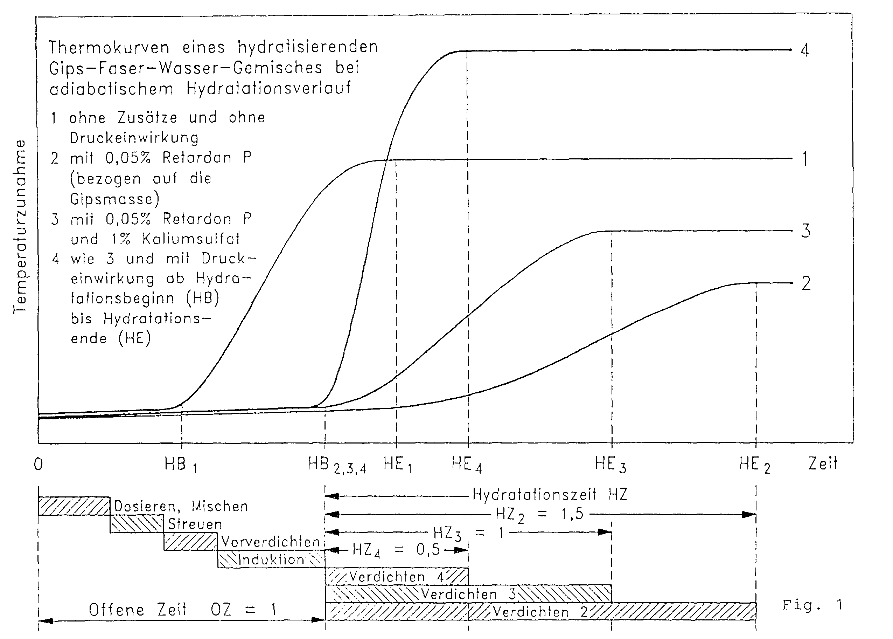

Gipsgebundene Verbundwerkstoffe werden in zunehmendem Maße nach hergestellt. Das Halbtrockenverfahren wird so ausgeführt, daß durch Mischen von Zuschlagstoffen (z.B. Späne oder Fasern) mit dem Gipsbindemittel eine streufähige Stoffgemischkonsistenz entsteht. Dieses Stoffgemisch wird mit Hilfe maschineller Streueinrichtungen zu einem Plattenvlies geringer Dichte gegestreut und mittels einer Presse so verdichtet, daß nach Ablauf der Hydratation in Abhängigkeit von der Stoffgemischzusammensetzung und dem aufgebrachten Druck eine mehr oder weniger dichte und feste Platte entstanden ist. Den unterschiedlichen Ausführungsformen dieses Halbtrockenverfahrens ist der Mangel gemeinsam, daß die kurze Offene Zeit (OZ) handelsüblicher Gipsbindemittel bei Anwendung von diskontinuierlichen Anlagen nicht ausreicht, um alle Operationen (Dosieren, Mischen, Streuen, Vorverdichten) vor dem Hydratationsbeginn (HB) ordnungsgemäß durchzuführen (s. Fig. 1, Kurve 1). Den zur Verarbeitung kommenden Stoffgemischen werden deshalb Verzögerer zugesetzt, die den Hydratationsbeginn (HB), aber als unerwünschte Nebenwirkung auch das Hydratationsende (HE) zeitlich nach hinten verschieben (s. Fig. 1, Kurve 2). Das hat zur Folge, daß sich die ohnehin schon langen Preßzeiten weiter verlängem. Das ist sowohl für den diskontinuierlichen als auch den kontinuieirlichen Hertellungsprozeß ein gravierender Mangel. Soweit dieses Problem in der Praxis überhaupt gelöst ist, wird der Verdichtungsteil der Anlage zu einem erheblichen Kostenfaktor für die Werkstoffherstellung.

Zur Vermeidung dieser Nachteile wurden bereits mehrere Verfahren vorgeschlagen. Die DE-OS 37 10 907.3 beschreibt ein Verfahren, nach dem die Hydratation des Gipses durch den Zusatz eines Verzögerers so stark verzögert werden soll, daß für den Verdichtungsvorgang ein Plattenstapel von 1m Höhe angesammelt werden kann, um diesen als Paket in einer entsprechend dimensionierten Presse zu verdichten. Um die Presse nun nicht für die lange Hydratationszeit des verzögerten Gipses mit diesem Plattenstapel zu blockieren, ist für den Preßvorgang in der Presse ein schweres Einspanngerüst angeordnet, das mit dem Verdichtungshub gschlossen und verriegelt wird, so daß die Plattenstapel außerhalb der Presse im Einspanngerüst erhärten können. Diese Verdichtungsprozedur setzt eine aufwendige Presse und eine kapazitätsabhängige große Anzahl von Einspanngerüsten voraus. Femer weisen die Platten aufgrund der Stapelpressung größere Dickentoleranzen auf, so daß in der Regel ein zusätzliches Schleifen zum Kalibrieren erforderlich ist. Diese aufwendige und kostspielige Lösung wird von E. Frick (in Zement-Kalk-Gips Nr. 7/1988) näher beschrieben.

Ein anderes Verfahren zur kontinuierlichen Herstellung u.a. von gipsgebundenen Verbundwerkstoffen wird in EP 171665 B2 beschrieben. Mit der dort offenbarten technischen Lösung der kurzzeitigen Überverdichtung wird eine vereinfachte kontinuierliche Verdichtungseinrichtung beschrieben. Jedoch hat sich diese Verfahrensweise aufgrund der zu langen Hydratationszeit und der dadurch erforderlichen langen Kalibriereinrichtung in der Praxis bisher nicht durchsetzen können. Femer hat dieses Verfahren den Nachteil, daß es für die Herstellung hochfester bis zum inkompressiblen Zustand verdichteter Verbundwerkstoffe nicht mehr anwendbar ist.

Ein Verfahren, nach dem eine Verkürzung der Hydratationszeit ohne Verkürzung der Offenen Zeit (OZ) durch Zuführung von Aktivierungsenergie während der Hydratationszeit (HZ) erreicht werden kann, ist in der DE OS 36 42802 dargestellt. Als Energieformen sind Wärmeenergie, elektrische und elektromechanische Energie genannt. Durch die Zufuhr von Wärmeenergie ist entsprechend den Gesetzmäßigkeiten, nach denen die Gipshydratation abläuft, keine Beschleunigung, sondern bestenfalls eine Verzögerung zu bewirken, weil die Löslichkeit des Halbhydrats mit zunehmender Temperatur abnimmt und der Dihydratbildungsmechanismus über die Lösungsphase abläuft.Das Hinzufügen des gesamten Anmachwassers und des Beschleunigungsmittels als Inhalt von Kapseln ist aus der DE OS 40 31 935 und in Form von Eiskömem aus der DE OS 39 29 703 bekannt. Dadurch kann die Offene Zeit (OZ), da das trockene Gemisch aus Gipsbindemittel, Zuschlagstoff und Kapseln bzw. Eiskömern gestreut und geformt wird, dem Fertigungsprozeß optimal angepaßt werden und die Hydratation durch Zerstörung der Kapseln bzw. Schmelzen der Eiskömer zu einem bestimmten Zeitpunkt eingeleitet und die Beschleunigungsmittel zur Wirkung gebracht werden. Diese Verfahren haben jedoch den Nachteil, daß ihre technische Durchführung schwierig, energieaufwendig und daher teuer ist. Die Verteilung der Beschleunigungsmittel erfolgt nur durch Kapillarität und Diffusion und die Beschleunigungswirkung ist dadurch nur verzögert einsetzbar.

Die Zugabe von Verzögerer-Beschleuniger-Kombination zur Regelung der Gipshydratation wird in "Der Baustoff Gips" (Verlag für Bauwesen, 1978, S. 26) erwähnt. Als Effekt wird die Verzögerung des Erstarrungsbeginns und danach die Beschleunigung des Hydratationsverlaufs angegeben (s. Fig. 1, Kurve 3). Karger (Baustoffindustrie 1988/6/Nov., S. 168) beschreibt diesen Vorgang als das zeitliche Heranführen des Versteifungs- und Hydratationsendes an den Versteifungsbeginn, ohne den Versteifungsbeginn wesentlich vorzuveriegen. Die Hydratationszeit kann durch die Zugabe einer bestimmten Verzögerer-Beschleuniger-Kombination von HZ/OZ=1,5 auf HZ/OZ=1 verkürzt werden, aber für eine wirtschaftliche Betriebsweise kontinuierlicher Fertigungsanlagen ist dieses relativ große Verhältnis noch von Nachteil.

Femer wird in der DE OS 40 31 935 ein Verfahren zur Herstellung gipsgebundener lignocellulosehaltiger Formkörper beschrieben. Es sind folgende Verfahrensschritte notwendig:
1. Trockenes Mischen von Fasem und Gipsbindemittel
2. Anschließende Fortsetzung des Mischvorganges unter Zugabe ligninsulfonsäurehaltigen Wassers
3. Zugabe eines Gemisches aus einem latent wirksamen Gipsbindebeschleuniger und feingemahlenem Besäumungsmaterial und/oder Schleifstaub aus den erfindungsgemäßen Formkörpem kurz vor dem Streuen.
4. Streuen und Verdichten der feuchten und homogenen Masse, bis der Gips abbindet.

Der Nachteil dieses Verfahrens besteht in der zu großen Zahl notwendiger einzelner Verfahrensschritte und in der schwierigen technischen Umsetzung der Zugabe des Beschleunigergemisches kurz vor dem Streuen.

Aufgabe der vorliegenden Erfindung ist es, ein Verfahren anzugeben, das die obengenannten Nachteile nicht aufweist und mit einer minimalen Anzahl von Verfahrensschritten eine maximale Verkürzung der für den Herstellungsprozeß relevanten Hydratationszeit (HZ) im Verhältnis zur Offenen Zeit (OZ) ermöglicht.

Diese Aufgabe wird durch die kennzeichnenden Merkmale des Anspruchs 1 gelöst. In den Ansprüchen 2 bis 8 sind Weiterbildungen des Verfahrens angegeben.

Bei dem erfindungsgemäßen Verfahren hat sich überraschenderweise herausgestellt, daß das für die Herstellung von Gipsverbundwerkstoffen wichtige Verhältnis von Hydratationszeit (HZ) zur Offenen Zeit (OZ) von üblicherweise mehr als 1,5 durch den Zusatz einer Verzögerer-Beschleuniger-Kombination in Verbindung mit einer Druckeinwirkung auf Werte kleiner als 1 gesenkt werden kann. Somit ermöglicht das erfindungsgemäße Verfahren bei einer einfachen und preisgünstigen Ausführungsform, die Nebenwirkungen des Einsatzes von Verzögerungen zu minimieren und so zu kürzeren Preßzeiten zu gelangen. Bei Anwendung eines dem gefügedichten Zustand entsprechenden Druckes kann das Verhältnis von Hydratationszeit (HZ) zur Offenen Zeit (OZ) sogar auf Werte kleiner als 0,5 gesenkt werden (Fig. 1, Kurve 4). Weiterhin schafft das Verfahren die Voraussetzungen dafür, einen teilweise kontinuierlich ablaufenden Prozeß (Mischen und Streuen) mit einem diskontinuierlichen Verdichtungsprozeß so zu kombinieren, daß die Herstellung hochverdichteter und hochfester Gipsverbundwerkstoffe großtechnisch realisierbar sind.

Eine vorteilhafte Ausgestaltung der Erfindung sieht vor, daß bereits handelsübliche Verzögerer und Beschleuniger in Konzentrationen verwendet werden, die der Wirkung bei separater Anwendung als Verzögerer bzw. Beschleuniger entsprechen und die Verzögerer-Beschleuniger-Kombination daraus vor dem eigentlichen Mischprozeß im Anmachwasser gleichmäßig verteilt wird. Überraschenderweise hat sich nämlich gezeigt, daß es ausreichend ist, wenn das quantitative Verhältnis des Verzögerers zum Beschleuniger in einem bestimmten Bereich liegt und dadurch das zeitaufwendige Ermitteln eines exakten Verhältniswertes entfällt

Femer ist es besonders vorteilhaft, daß die Druckeinwirkung - wenn verfahrenstechnisch notwendig - spätestens mit dem im drucklosen Zustand eintretenden Hydratationsbeginn (HB) erfolgt und während der verkürzten Hydratationszeit aufrechterhalten wird oder daß durch eine frühere Druckanwendung, als es dem Hydratationsbeginn im drucklosen Zustand entspricht, der Hydratationsbeginn (HB) zeitlich vorverlegt und die Druckanwendung während der gleichermaßen verkürzten Hydratationszeit aufrechterhalten wird.

Gemäß Anspruch 8 ist es günstig, daß für die Herstellung von Verbundwerkstoffen geringerer Dichte, als es dem gefügedichten Zustand entspricht, die vorteilhafte Verkürzung der Hydrata-tionszeit (HZ) bzw. Preßzeit durch eine kurzzeitige Überverdichtung bei nachfolgender Entspannung am Anfang der Hydratationsphase erfolgt.Die nachfolgenden Beispiele und Zeichnungen dienen zur Erläuterung der Erfindung.
- In Fig. 1:: sind Thermokurven eines hydratisierenden Gips-Faser-Wasser-Gemisches bei adiabatischem Hydratationsverlauf dargestellt
- In Fig. 2:: ist ein Nomogramm zur Bestimmung der Mindestpressenlänge bei kontinuierlicher Gipsplattenfertigung in Abhängigkeit von der Hydratationszeit des Gipses und der Fertigungskapazität wiedergegeben

### Beispiel 1

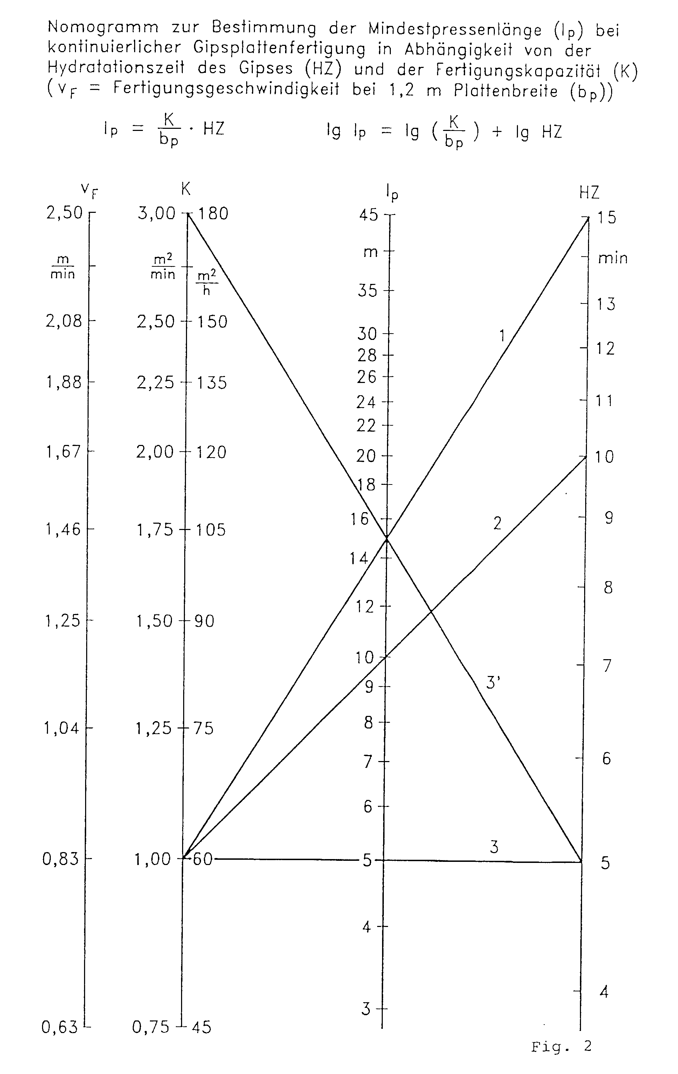

Es wurde eine spezielle Fasergipsplatte nach einem Verfahren gemäß P 42 39 033.8-25 in einem kontinuierlichen Fertigunsprozeß, in dem die Fertigungskapazität in bezug auf den Misch- und Streuprozeß zwischen 0,75 m²/min und 3m²/min stufenlos regelbar ist, hergestellt. Es sollen konstant 1 m² Platten pro Minute hergestellt werden, so daß die erforderliche Pressemindestlänge (Iₚ) nur noch von der Hydratationszeit (HZ) abhängig war. Zur Plattenherstellung wurde ein handelsüblicher Stuckgips nach DIN 1168 mit einem Versteifungsbeginn bzw. einer Offenen Zeit (OZ) von 10 min und einem Hydratationsende nach 25 min, d.h. einer Hydratationszeit (HZ) von 15 min verwendet. Die Mindestpressenlänge beträgt 15 m (s. Fig. 2, Lösung 1).

Erfindungsgemäß wurde durch die Anwendung einer Verzögerer-Beschleuniger-Kombination aus 0,05 % Retardan P und 1 % Kaliumsulfat (bezogen auf die eingesetzte Gipsbindemittelmasse) in Verbindung mit Druck bei gleicher OZ (10 min) die Hydratationszeit (HZ) auf 5 min verkürzt, so daß für die gleiche Fertigungskapazität nur noch eine Pressenlänge von 5 m erforderlich war (Fig. 2, Lösung 3). Bleibt dagegen die ursprünglich ermittelte Pressenlänge von 15 m konstant, dann wird durch die Anwendung der Erfindung die Anlagenkapazitiät verdreifacht (s. Fig. 2, Lösung 3').

### Beispiel 2:

Zur Herstellung eines Verbundwerkstoffes wurde eine Anlage (Fertigungsbreite 1,25 m) mit in gewissen Grenzen regelbarer Misch- und Streukapazität sowie einer Presse mit einer nutzbaren Länge von 4,25 m verwendet. Es wurden Stuckgips (100%) nach DIN 1168 mit 12,5 % Cellulosefasern und 25 % Wasser, das 0,04 % Retardan P enthält, gemischt und zu einem Plattenvlies gestreut. Der Retardanzusatz war nötig, um den zu kurzen Hydratationsbeginn von 7 auf 15 min zu verlängem. Die Hydratationszeit (Preßzeit) betrug danach 24 min. Im Dreischichtenbetrieb (240 Arbeitstage/a) produziert die Anlage 76.500 m² Platten.

### Beispiel 3:

Mit der gleichen Anlage und Stoffgemischzusammensetzung, jedoch mit einer erfindungsgemäßen Verzögerer-Beschleuniger-Kombination aus 0,05 % Retardan P und 1 % Kaliumsulfat in Verbindung mit einer am Hydratationsbeginn einsetzenden Verdichtung bis zum gefügedichten Zustand, wurde die Hydratationszeit (Preßzeit) auf 7 min gesenkt und die Plattenproduktion auf 262.300 m²/a erhöht.

### Beispiel 4:

Ein Gipsbindemittel (β-Halbhydrat) wurde mit 15 % Fasem und den im Anmachwasser (25%) gelösten Additiven (0,05 % Retardan P; 1 % Kaliumsulfat) homogen vermischt. Im Anschluß an die Formung der Frischmasse zu einem Plattenvlies erfolgte eine Vorverdichtung auf ewa 2xdₛₒₗₗ. Mit dem Anstieg der Temperatur-Zeit-Kurve (Hydratationsbeginn), 16 min nach Mischbeginn, wurde das Vlies auf dₛₒₗₗ verdichtet. Das Temperaturmaximum (HE) wurde nach weiteren 6 min erreicht, so daß die Presse geöffnet werden konnte. Wird das Vlies nicht verdichtet, ergibt sich eine Hydratationszeit von 13 min.

### Beispiel 5:

Es wurde eine Frischmasse wie in Beispiel 3 hergestellt, jedoch mit einem Retardanzusatz von 0,08%. Die zu einem Vlies geformte Frischmasse wurde nach einer Zeitspanne von 31,5 min nach der Anmachwasserzugabe mittels einer Presse verdichtet. Die Temperatur-Zeit-Kurve zeigte nach weiteren 1,5 min - 33 min nach Wasserzugabe - einen deutlichen Temmperaturanstieg (Hydratationsbeginn). Die Hydratationszeit betrug 9 min, dieses entspricht einer Hydratationsdauer (HB + HE) von 42 min. Wird das Vlies nicht verdichtet, setzt der Hydratationsbeginn nach 43 min ein und die Hydratationszeit beträgt 32 min (Hydratationsdauer 65 min).

### Beispiel 6:

Es wurde bei der Herstellung einer Frischmasse auf die Zugabe eines Beschleunigers (Kaliumsulfat) verzichtet. Unter gleichen Bedingungen wie in Beispiel 4 wurde ein Hydratationsbeginn von 40 min und eine Hydratationszeit von 47 min bei einem verdichteten Plattenvlies erreicht. Im unverdichteten Zustand beträgt die Hydratationszeit 234 min.

## Patentansprüche

1. Verfahren zur gezielten Beeinflussung des Verhältnisses von Hydratationszeit (HZ) zur Offenen Zeit (OZ), bei der Herstellung von Verbundwerkstoffen, insbesondere Platten aus streufähigen Stoffgemischen, bestehend aus hydratationsfähigem Kalziumsulfat, insbesondere Gipsbindemittel, Zuschlagstoffen, Fasem, Additiven zu Wasser und Zusatzstoffen, **dadurch gekennzeichnet,** daß dieses Verhältnis (HZ:OZ) durch den Zusatz einer Verzögerer-Beschleuniger-Kombination in Verbindung mit der Einwirkung von Druck auf Werte kleiner als 1 gesenkt wird.

2. Verfahren nach Anspruch 1, **dadurch gekennzeichnet,** daß das Verhältnis HZ:OZ auf Werte kleiner als 0,5 gesenkt wird.

3. Verfahren nach Anspruch 1 oder 2, **dadurch gekennzeichnet,** daß die Verzögerer-Beschleuniger-Kombination aus Retardan, vorzugsweise des Typs P und Kaliumsulfat besteht.

4. Verfahren nach einem der Ansprüche 1 bis 3, **dadurch gekennzeichnet,** daß der Retardanzusatz - bezogen auf die Kalziumsulfat-Bindemittel-Masse - 0,01 bis 0,10 % und der Kaliumsulfatzusatz 0,25 bis 2,50 % beträgt.

5. Verfahren nach einem der vorangegangenen Ansprüche, **dadurch gekennzeichnet,** daß die Verzögerer-Beschleuniger-Kombination vor dem eigentlichen Mischprozeß im Anmachwasser gleichmäßig verteilt wird.

6. Verfahren nach einem der vorangegangenen Ansprüche, **dadurch gekennzeichnet,** daß die Druckeinwirkung zur Verdichtung des Formteils mit dem Hydratationsbeginn (HB) erfolgt und während der gesamten Hydratationszeit (HZ) aufrechterhalten wird.

7. Verfahren nach einem der vorangegangenen Ansprüche, **dadurch gekennzeichnet,** daß die Druckeinwirkung zur Verdichtung des Formteils vor dem im drucklosen Zustand eintretenden Hydratatonsbeginn (HB) erfolgt und während der gesamten Hydratationszeit aufrechterhalten wird.

8. Verfahren nach einem der vorangegangenen Ansprüche, **dadurch gekennzeichnet,** daß am Anfang der Verdichtungsphase eine kurzzeitige Überverdichtung erfolgt.

## Claims

1. Method of influencing in a controlled manner the ratio of hydration time (HZ) to open time (OZ) in the manufacture of composite materials, particularly panels of spreadable material mixtures, consisting of hydratable potassium sulphate, particularly gypsum binders, additives, fibres, additives to water and additive materials, characterised in that this ratio (HZ:OZ) is reduced to values of less than 1 by the addition of a delay-accelerator combination in conjunction with the action of pressure.

2. Method according to claim 1, cnaracterised in that the ration HZ:OZ is reduced to values of less than 0.5.

3. Method according to claim 1 or 2, characterised in that the delay-accelerator combination consists of Retardan, preferably the type P and potassium sulphate.

4. Method according to one of claims 1 to 3, characterised in that the Retardan additive, relative to the calcium sulphate binder mass comes to 0.01 to 0.10, and the potassium sulphate additive comes to 0.25 to 2.50%.

5. Method according to one of the preceding claims, characterised in that the delay-accelerator combination is uniformly distributed in the mixing water before the actual mixing process.

6. Method according to one of the preceding claims, characterised in that the pressure action for condensing the moulded part is effected at the beginning of hydration (HB) and is maintained during the entire hydration time (HZ).

7. Method according to one of the preceding claims, characterised in that the pressure action for condensing the moulded part is effected before the beginning of hydration (HB) occurring in the pressure-free condition and is maintained during the entire hydration time.

8. Method according to one of the preceding claims, characterised in that a short-term over condensation is effected at the beginning of the condensation phas.

## Revendications

1. Procédé pour influencer de manière dirigée le rapport entre le temps d'hydratation (HZ) et le temps de prise (OZ) pour la fabrication de matériaux composites notamment de plaques en des mélanges de matière susceptible d'être étalée, comprenant du sulfate de calcium susceptible d'être hydraté, notamment un liant plâtre, des charges, des fibres, des additifs dans l'eau et dans les charges,
caractérisé en ce que
ce rapport (HZ/OZ) est abaissé par l'adjonction d'une combinaison agent retardateur/agent accélérateur, en liaison avec l'effet de la pression pour arriver à des valeurs inférieures à 1.

2. Procédé selon la revendication 1,
caractérisé en ce que
le rapport HZ/OZ est abaissé à des valeurs inférieures à 0,5.

3. Procédé selon l'une des revendications 1 ou 2,
caractérisé en ce que
la combinaison agent retardateur/agent accélérateur se compose de retardant, de préférence de type P et de sulfate de potassium.

4. Procédé selon l'une des revendications 1 ou 3,
caractérisé en ce que
l'adjonction de retardant (par rapport la masse sulfate de calcium/agent liant) était de 0,01 à 0,10 % et l'adjonction de sulfate de potassium était de 0,25-0,50 %.

5. Procédé selon l'une quelconque des revendications précédentes,
caractérisé en ce que
la combinaison agent retardateur/agent accélérateur, est répartie régulièrement dans l'eau avant que l'on effectue le mélange proprement dit.

6. Procédé selon l'une quelconque des revendications précédentes,
caractérisé en ce que
l'effet de la pression sur la compression de la pièce moulée se fait avec le début de l'hydratation (HB) et reste maintenu pendant toute la durée d'hydratation (HZ).

7. Procédé selon l'une quelconque des revendications précédentes,
caractérisé en ce que
l'effet de la pression pour comprimer la pièce moulée se fait avant le début de l'hydratation (HB) se produisant à l'état sans pression et reste maintenu pendant toute la durée de l'hydratation.

8. Procédé selon l'une quelconque des revendications précédentes,
caractérisé en ce qu'
au début de la phase de compression, on a une surcompression de courte durée.
